# EUROPEAN PATENT APPLICATION

(11) **EP 4 814 046 A1**
(43) Date of publication of application: **30.09.2026**
(21) Application number: 26169185.1
(22) Date of filing: 30.03.2026
(51) Int. Cl.: C08J 7/14, C08J 5/18

(54) **SULFONATION TREATMENT FOR FORMING A THERMOPLASTIC PART**

(30) Priority: 28.03.2025 US 202563779690 P
(71) Applicant: Rohr, Inc., Chula Vista, CA 91910-2098 (US)
(72) Inventor: BORDAGE, Kevin R., Westfield, 01085 (US); ARMY, Donald E., Enfield, 06082 (US); VEILLEUX JR., Leo J., Wethersfield, 06109 (US); SMITH, Blair A., Manchester, 06040 (US); PUJAR, Vijay V., San Diego, 92127 (US); SHEN, Shyan Bob, San Diego, 92126 (US); VAN TOOREN, Michael, San Diego, 92122 (US); URSENBACH, Daniel O., El Cajon, 92019 (US); CROSHAW, Chris, San Diego, 92110 (US)
(74) Representative: Dehns

(57) **Abstract**

A method (200) for forming a thermoplastic part includes sulfonating a thermoplastic film by exposing the thermoplastic film to a sulfonation fluid to form a sulfonated thermoplastic film and forming the thermoplastic part with a plurality of stacked thermoplastic film layers. The plurality of stacked thermoplastic film layers include at least one sulfonated thermoplastic film layer of the sulfonated thermoplastic film and a plurality of unsulfonated thermoplastic film layers. The at least one sulfonated thermoplastic film layer forms a first exterior thermoplastic film surface of the thermoplastic part.

## Description

### BACKGROUND

### 1. Technical Field

This disclosure relates generally to thermoplastic parts for aircraft and, more particularly, to methods for applying a sulfonation treatment to thermoplastic materials during manufacture of a thermoplastic part.

### 2. Background Information

Aircraft components, such as those forming aerostructure components (e.g., panels) of a fuselage, wings, propulsion system nacelles, interior parts, and other structural components of aircraft, increasingly include thermoplastic materials (e.g., thermoplastic composite materials). While these thermoplastic materials provide substantial benefits to aircraft weight and manufacturing costs, they can be resistant to coating by paint and other coating materials. Various processes are known in the art for improving the coating characteristics of thermoplastic parts. While these known processes have various advantages, there is still room in the art for improvement.

### SUMMARY

According to an aspect of the present disclosure, a method for forming a thermoplastic part includes sulfonating a thermoplastic film by exposing the thermoplastic film to a sulfonation fluid to form a sulfonated thermoplastic film and forming the thermoplastic part with a plurality of stacked thermoplastic film layers. The plurality of stacked thermoplastic film layers include at least one sulfonated thermoplastic film layer of the sulfonated thermoplastic film and a plurality of unsulfonated thermoplastic film layers. The at least one sulfonated thermoplastic film layer forms a first exterior thermoplastic film surface of the thermoplastic part.

In any of the aspects or embodiments described above and herein, sulfonating the thermoplastic film may include increasing a sulfur content of the sulfonated thermoplastic film to have an infrared spectrum detectable amount of a sulfone group (O=S=O) with a peak wavenumber between 1,000 cm⁻¹ and 1,098 cm⁻¹.

In any of the aspects or embodiments described above and herein, sulfonating the thermoplastic film may include increasing the sulfur content of the sulfonated thermoplastic film to have the infrared spectrum detectable amount of the sulfone group (O=S=O) with the peak wavenumber between 1,025 cm⁻¹ and 1,050 cm⁻¹.

In any of the aspects or embodiments described above and herein, sulfonating the thermoplastic film may include sulfonating the thermoplastic film with a continuous sulfonation assembly by continuously feeding the thermoplastic film through a sulfonating chamber of the continuous sulfonation assembly containing the sulfonation fluid.

In any of the aspects or embodiments described above and herein, sulfonating the thermoplastic film with the continuous sulfonation assembly may include heating the thermoplastic film with a heater of the continuous sulfonation assembly prior to feeding the thermoplastic film through the sulfonating chamber.

In any of the aspects or embodiments described above and herein, the method may further include applying a neutralizing agent to the sulfonated thermoplastic film between the steps of sulfonating the thermoplastic film and forming the thermoplastic part.

In any of the aspects or embodiments described above and herein, the thermoplastic part may extend between and to a first side and a second side, the at least one sulfonated thermoplastic film layer may include a first sulfonated thermoplastic film layer and a second thermoplastic film layer, the first sulfonated thermoplastic film layer may form the first exterior thermoplastic film surface at the first side, the second sulfonated thermoplastic film layer may form a second exterior thermoplastic film surface at the second side, and the plurality of unsulfonated thermoplastic film layers may be disposed between the first sulfonated thermoplastic film layer and the second sulfonated thermoplastic film layer.

In any of the aspects or embodiments described above and herein, the method may further include coating the first exterior thermoplastic film surface by applying a coating layer onto the at least one sulfonated thermoplastic film at the first exterior thermoplastic film surface.

In any of the aspects or embodiments described above and herein, the thermoplastic film may include a polyether ether ketone (PEEK), a poly ether ketone ketone (PEKK), or a poly aryl ether ketone (PAEK) thermoplastic material.

In any of the aspects or embodiments described above and herein, the thermoplastic film may further include a fiber-reinforcing material embedded in the thermoplastic material.

According to another aspect of the present disclosure, a method includes sulfonating a thermoplastic film having a first film side and a second film side by exposing one or both of the first film side and the second film side to a sulfonation fluid to form a sulfonated thermoplastic film.

In any of the aspects or embodiments described above and herein, sulfonating the thermoplastic film may include exposing the thermoplastic film to the sulfonation fluid in a sulfonation chamber to form the sulfonated thermoplastic film by continuously feeding the thermoplastic film through the sulfonation chamber in a feed direction.

In any of the aspects or embodiments described above and herein, the method may further include forming the thermoplastic part with a plurality of stacked thermoplastic film layers. The plurality of stacked thermoplastic film layers may include at least one of the sulfonated thermoplastic film. The at least one of the sulfonated thermoplastic film may form a first exterior thermoplastic film surface of the thermoplastic part.

In any of the aspects or embodiments described above and herein, sulfonating the thermoplastic film may include exposing only one of the first film side or the second film side to the sulfonation fluid.

In any of the aspects or embodiments described above and herein, the method may further include coating the first exterior thermoplastic film surface by applying a coating layer onto the at least one sulfonated thermoplastic film at the first exterior thermoplastic film surface.

In any of the aspects or embodiments described above and herein, the thermoplastic film may include a polyether ether ketone (PEEK), a poly ether ketone ketone (PEKK), or a poly aryl ether ketone (PAEK) thermoplastic material.

According to another aspect of the present disclosure, a method for forming a thermoplastic part includes forming the thermoplastic part by assembling and consolidating a plurality of stacked thermoplastic film layers. The plurality of stacked thermoplastic film layers includes at least one sulfonated thermoplastic film layer and a plurality of unsulfonated thermoplastic film layers. The at least one sulfonated thermoplastic film layer has a sulfur content such that the at least one sulfonated thermoplastic film layer has an infrared spectrum detectable amount of a sulfone group (O=S=O) with a peak wavenumber between 1,000 cm⁻¹ and 1,098 cm⁻¹. The at least one sulfonated thermoplastic film layer forms a first exterior thermoplastic film surface of the thermoplastic part.

In any of the aspects or embodiments described above and herein, the method may further include sulfonating a thermoplastic film to form each of the at least one sulfonated thermoplastic film layer. Sulfonating the thermoplastic film may include sulfonating the thermoplastic film with a continuous sulfonation assembly by continuously feeding the thermoplastic film through a sulfonating chamber of the continuous sulfonation assembly containing a sulfonation fluid.

In any of the aspects or embodiments described above and herein, the thermoplastic part may extend between and to a first side and a second side, the at least one sulfonated thermoplastic film layer may include a first sulfonated thermoplastic film layer and a second thermoplastic film layer, the first sulfonated thermoplastic film layer may form the first exterior thermoplastic film surface at the first side, the second sulfonated thermoplastic film layer may form a second exterior thermoplastic film surface at the second side, and the plurality of unsulfonated thermoplastic film layers may be disposed between the first sulfonated thermoplastic film layer and the second sulfonated thermoplastic film layer.

In any of the aspects or embodiments described above and herein, the method may further include coating the first exterior thermoplastic film surface by applying a coating layer onto the at least one sulfonated thermoplastic film at the first exterior thermoplastic film surface.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 illustrates a perspective view of an aircraft, in accordance with one or more embodiments of the present disclosure.
FIG. 2 illustrates a flow chart depicting a method for forming a thermoplastic part using a sulfonated thermoplastic film, in accordance with one or more embodiments of the present disclosure.
FIG. 3 schematically illustrates sulfonation and neutralization steps of the method, in accordance with one or more embodiments of the present disclosure.
FIG. 4 schematically illustrates a continuous sulfonation assembly, in accordance with one or more embodiments of the present disclosure.
FIG. 5 schematically illustrates a cutaway view of a thermoplastic part including a plurality of thermoplastic film layers, in accordance with one or more embodiments of the present disclosure.
FIG. 6 schematically illustrates a cutaway view of thermoplastic part including a plurality of thermoplastic film layers, in accordance with one or more embodiments of the present disclosure.
FIG. 7 schematically illustrates an automated fiber placement (AFP) assembly, in accordance with one or more embodiments of the present disclosure.
FIG. 8 illustrates a perspective view of an aircraft propulsion system assembly, in accordance with one or more embodiments of the present disclosure.
FIG. 9 illustrates a perspective view of an aircraft propulsion system assembly, in accordance with one or more embodiments of the present disclosure.
FIG. 10 schematically illustrates a cutaway, side view of an aircraft propulsion system assembly, in accordance with one or more embodiments of the present disclosure.
FIG. 11 schematically illustrates a cutaway, side view of an aircraft propulsion system assembly, in accordance with one or more embodiments of the present disclosure.

### DETAILED DESCRIPTION

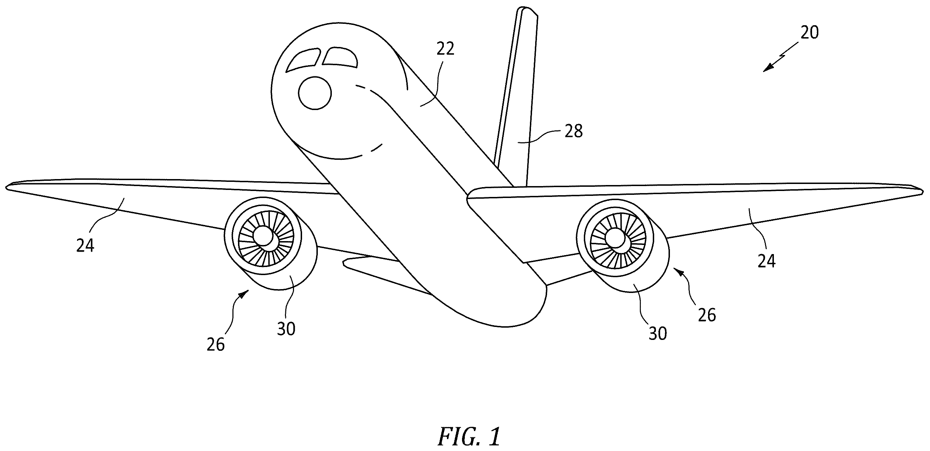

FIG. 1 illustrates an aircraft 20 such as an airplane (e.g., a fixed-wing aircraft). The aircraft 20 of FIG. 1 includes a fuselage 22, wings 24, propulsion systems 26, and a tail assembly 28. The wings 24 extend outward from the fuselage 22. Each of the propulsion systems 26 is mounted on a respective one of the wings 24. The tail assembly 28 is disposed at an aft end of the fuselage 22. In some embodiments, the tail assembly 28 may additionally include a horizontal stabilizer (not shown). The present disclosure, however, is not limited to the foregoing exemplary aircraft 20 configuration, and the aircraft 20 may alternatively be a rotary-wing aircraft (e.g., a helicopter), a tilt-rotor aircraft, a tilt-wing aircraft, a propeller-driven aircraft, or another aerial vehicle. Moreover, the aircraft 20 may be a manned aerial vehicle or an unmanned aerial vehicle (UAV, e.g., a drone, a satellite, etc.)

The propulsion systems 26 of FIG. 1 are configured as a turbofan gas turbine engine propulsion system. However, it should be understood that aspects of the present disclosure may be equally applicable to other configurations of propulsion system or gas turbine engine configurations. Each of the propulsion systems 26 of FIG. 1 includes a nacelle 30 configured to house and provide an exterior aerodynamic cover for the respective one of the propulsion systems 26.

Aircraft parts, such as those forming all or portions of the fuselage 22, the wings 24, the tail assembly 28, the nacelle 30, or other aerostructure parts of the aircraft 20 may be selected to provide suitable structural strength, rigidity, and impact resistance while also minimizing weight. Other examples of aircraft parts may include ducts, water collectors, brake rods, electronic boxes, heat sinks, piping, interior structures (e.g., lavatory surfaces, galley surfaces, tray tables, seat frames, overhead storage compartments, etc.), electrical connector components, and the like. Thermoplastic materials (e.g., thermoplastic composite materials) may be used for aircraft parts, such as those described above, in order to reduce aircraft weight and manufacturing costs, for example, in comparison to conventional metal (e.g., aluminum) and thermoset materials. However, thermoplastic composite parts tend to exhibit low surface energy, thereby contributing to poor adhesion of paint, metal plating, lightning strike protection layers, bonding agents (e.g., adhesives), and other coatings to surfaces of the thermoplastic parts. These poor adhesion characteristics of thermoplastic parts can, in some cases, degrade the effectiveness of lightning strike protection layers, accelerate cracking and/or peeling of paint or other surface coatings, and/or prevent suitable bonding between thermoplastic components.

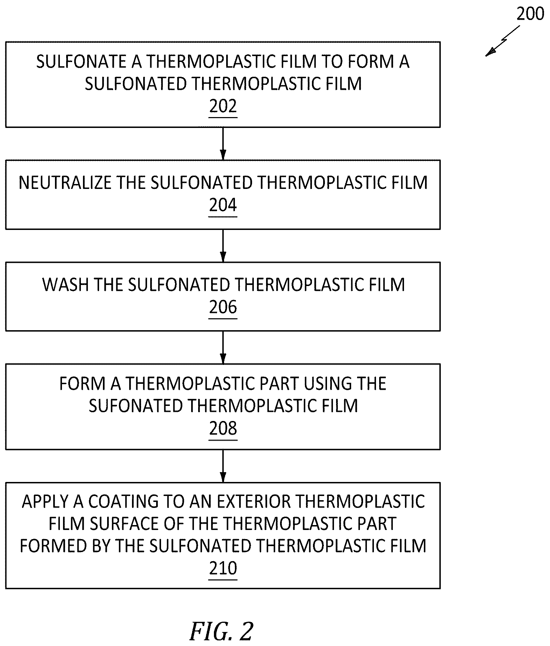

Referring to FIG. 2, a method 200 for forming a thermoplastic part using a sulfonated thermoplastic film is provided. FIG. 2 illustrates a flowchart for the method 200. While the present disclosure method is described for forming thermoplastic parts using a sulfonated thermoplastic film, aspects of the present disclosure are also applicable to forming thermoset parts from a sulfonated thermoset film. Unless otherwise noted herein, it should be understood that the steps of method 200 are not required to be performed in the specific sequence in which they are discussed below and, in some embodiments, the steps of method 200 may be performed separately or simultaneously. Further, it should be understood that not all of the steps of the method 200, discussed below, may be required unless otherwise described herein.

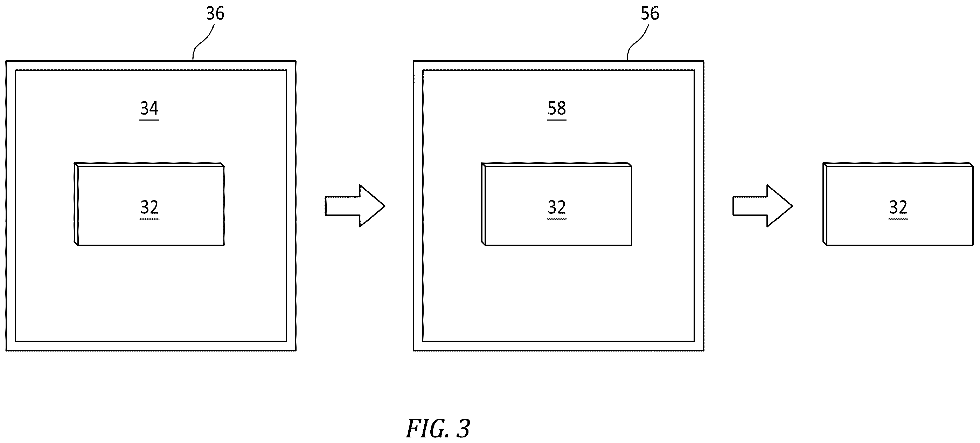

Referring to FIG. 3, step 202 includes sulfonating a thermoplastic film 32. The thermoplastic film 32 may be configured, for example, as a thermoplastic prepreg film or a thermoplastic resin film. The thermoplastic prepreg film may be a thermoplastic composite film including a fiber-reinforcing material embedded in (e.g., impregnated by) a thermoplastic material (e.g., a thermoplastic matrix material). The thermoplastic resin film may include a thermoplastic material without a fiber-reinforcing material. Examples of the thermoplastic material include polyamide (PA), polyamide-imide (PAI), polyarylsulfone (PAS), polyethersulfone (PES), polyoxymethylene (POM), polyphenylene sulfide (PPS), polyether ether ketone (PEEK), polyetherimide (PEI), polyphthalamide (PPA), poly ether ketone ketone (PEKK), or poly aryl ether ketone (PAEK), or the like, or any combination thereof. Examples of the composite reinforcement material include glass fibers, carbon fibers, aramid fibers, basalt fibers, mineral fibers, fibers from renewable raw materials, metal fibers, or polymer fibers, or the like, or any combination thereof. The present disclosure is not limited to the foregoing exemplary thermoplastic materials and composite reinforcement materials. The thermoplastic film 32 may be arranged as sheets, on a roll, or the like.

Step 202 includes applying a sulfonation fluid 34 to the thermoplastic film 32. The thermoplastic film 32 may be positioned within a sulfonating chamber 36 (e.g., formed by a fully or partially enclosed tank or other enclosure) and exposed to the sulfonating fluid 34 to sulfonate the thermoplastic film 32. The sulfonation fluid 34 may be a gas or liquid as discussed below. The present disclosure is not limited to any particular gas or liquid sulfonating process, and the thermoplastic film 32 may be sulfonated using any conventional gas or liquid sulfonating process conventionally known in the art. Application of the sulfonating fluid 34 to the thermoplastic film 32 introduces the sulfone group (O=S=O) into the polymer chains of the thermoplastic film 32 (e.g., the thermoplastic material), thereby changing the properties (e.g., a higher surface energy and a lower static contact angle) of the sulfonated thermoplastic film 32. For example, the sulfonated thermoplastic film 32 may have a sulfur content with an infrared spectrum detectable amount of the sulfone group (O=S=O) with a peak wavenumber in the region between approximately 1,000 cm⁻¹ and approximately 1,098 cm⁻¹ and, more preferably, between approximately 1,025 cm⁻¹ and approximately 1,050 cm⁻¹ with a peak intensity higher than approximately 0.002 absorbance (or higher than approximately 0.2 percent reflectance) using, for example, an attenuated total reflectance (ATR) technique at (e.g., on, adjacent, or proximate) the sulfonated thermoplastic film 32. Of course, a suitable sulfone group content of the sulfonated thermoplastic film 32 to facilitate coating (e.g., painting, bonding, metal plating, etc.) will depend on a number of factors such as, but not limited to, the particular thermoplastic material of the sulfonated thermoplastic film 32, a surface roughness of the sulfonated thermoplastic film 32, and/or a material of the coating to be subsequently applied to the sulfonated thermoplastic film 32.

For gas-phase sulfonation of the thermoplastic film 32, the thermoplastic film 32 is exposed to the gaseous sulfonation fluid 34 within the sulfonating chamber 36. The gaseous sulfonation fluid 34 may include sulfur trioxide (SO₃), sulfur dioxide (SO₂), or a combination of sulfur trioxide (SO₃) and sulfur dioxide (SO₂). The gaseous sulfonation fluid 34 may additionally include a gas which is non-reactive with the sulfur trioxide (SO₃) and/or the sulfur dioxide (SO₂) such as, but not limited to, air or nitrogen. For example, the sulfonating gas may include between approximately 0.05 percent and approximately 2 percent sulfur trioxide (SO₃), sulfur dioxide (SO₂), or a combination of sulfur trioxide (SO₃) and sulfur dioxide (SO₂), by volume, in approximately 95 percent to approximately 99.5 percent nitrogen, by volume. A duration for which thermoplastic film 32 is exposed to the gaseous sulfonation fluid 34 within the sulfonating chamber 36 may be between approximately 20 seconds and approximately 60 minutes. Some thermoplastic materials may have higher resistance to sulfonation and may need longer treatment time and/or higher treatment temperatures such as, for example, polyphenylene sulfide (PPS) and polyetherimide (PEI).

For liquid-phase sulfonation of the thermoplastic film 32, the thermoplastic film 32 may be exposed to the liquid sulfonation fluid 34 within the sulfonating chamber 36. The liquid sulfonation fluid 34 may include sulfuric acid (H₂SO₄) or fuming sulfuric acid (SO₃H₂SO₄). The liquid sulfonation fluid 34 may have a sulfur trioxide (SO₃) content of between approximately 5 percent and approximately 30 percent, by mass. A duration for which thermoplastic film 32 is exposed to the liquid sulfonation fluid 34 within the sulfonating chamber 36 may be between approximately 1 minute and approximately 60 minutes.

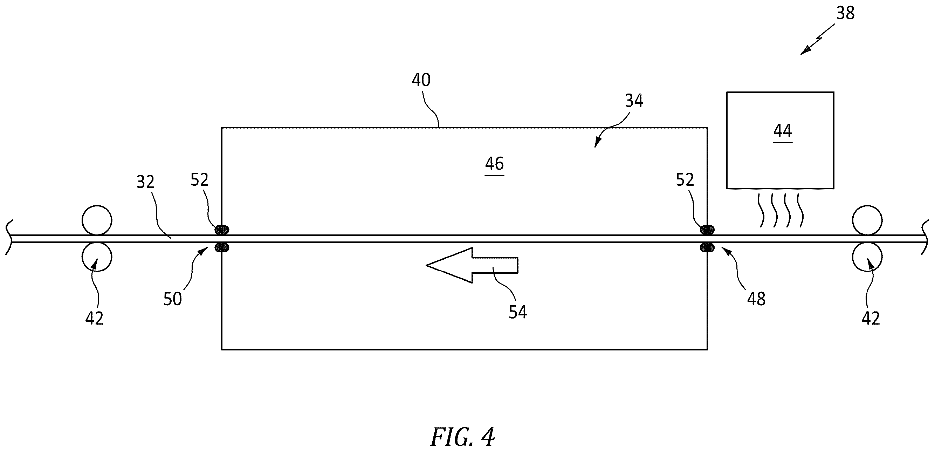

Referring to FIG. 4, step 202 may include sulfonating the thermoplastic film 32 using a continuous sulfonation process. FIG. 4 schematically illustrates an exemplary continuous sulfonation assembly 38. The continuous sulfonation assembly 38 of FIG. 4 includes a sulfonating tank 40 and at least one film feeder 42. The continuous sulfonation assembly 38 may additionally include a heater 44. The sulfonating tank 40 surrounds and forms a sulfonating chamber 46 configured to retain a sulfonating fluid such as, for example, the sulfonating fluid 34 (e.g., a gas sulfonating fluid or a liquid sulfonating fluid). The sulfonating tank 40 forms an inlet opening 48 and an outlet opening 50 for the thermoplastic film 32. The sulfonating tank 40 may include fluid seals 52 at (e.g., on, adjacent, or proximate) the inlet opening 48 and the outlet opening 50 to facilitate sulfonating fluid retention within the sulfonating chamber 46. The continuous sulfonating assembly 38 may include the film feeder 42 upstream of the sulfonating tank 40 (e.g., the inlet opening 48) and/or downstream of the sulfonating tank 40 (e.g., the outlet opening 50) relative to a feed direction 54 of the thermoplastic film 32 through the sulfonating chamber 46. The film feeder 42 is configured to feed (e.g., move) the thermoplastic film 32 through the sulfonating chamber 46 in the feed direction, for example, using one or more feed rollers. The heater 44 may be positioned at (e.g., on, adjacent, or proximate) the thermoplastic film 32 upstream of the sulfonating tank 40 (e.g., the inlet opening 48). The heater 44 may facilitate heating the thermoplastic film 32 prior to exposing the thermoplastic film 32 to the sulfonating fluid within the sulfonating chamber 46 to improve sulfonation of the thermoplastic film 32 and/or reduce the sulfonation time needed for the thermoplastic film 32 (e.g., thereby increasing throughput of the thermoplastic film 32 through the sulfonating chamber 46). In operation, the film feeder(s) 42 feeds the thermoplastic film 32 through the sulfonating tank 40 at the inlet opening 48 and the outlet opening 50 to expose the thermoplastic film 32 to the sulfonating fluid within the sulfonating chamber 46. The film feeder(s) 42 feeds the thermoplastic film 32 along the feed direction 54 at a predetermined feed rate to sulfonate the thermoplastic film 32 with the target sulfonation properties described above for facilitating thermoplastic material coating. For example, the thermoplastic film 32 may be feed by the film feeder(s) from a first film roll (e.g., a roll of the unsulfonated thermoplastic film 32) to a second film roll (e.g., a roll of the sulfonated thermoplastic film 32). In some embodiments, the continuous sulfonation assembly 38 may be disposed within a containment enclosure (not shown) to prevent or minimize loss of or personnel exposure to the sulfonating fluid disposed within the sulfonating chamber 46.

Referring again to FIG. 3, step 204 includes neutralizing the sulfonated thermoplastic film 32 with a neutralizing fluid, to remove excess acid from the sulfonated thermoplastic film 32 and to stabilize the thermoplastic material of the sulfonated thermoplastic film 32, for example, with a pH value approximately between 7 and 9. The sulfonated thermoplastic film 32 may be positioned within a neutralizing chamber 56 (e.g., formed by a fully or partially enclosed tank or other enclosure) and exposed to a neutralizing fluid 58 within the neutralizing chamber 56. The neutralizing fluid 58 may include, for example, an aqueous solution of a neutralizing agent (e.g., a buffering agent) such as, but not limited to, sodium hydroxide (NaOH), potassium hydroxide (KOH), calcium carbonate (CaCO₃), magnesium oxide (MgO), sodium carbonate (Na₂CO₃), sodium bicarbonate (NaHCO₃), or calcium hydroxide (Ca(OH)₂), amines, or another suitable base.

Step 206 includes, optionally, washing (e.g., with water) the sulfonated thermoplastic film 32, to remove any remaining impurities or residues from the sulfonation process, and drying the sulfonated thermoplastic film 32 to remove excess moisture.

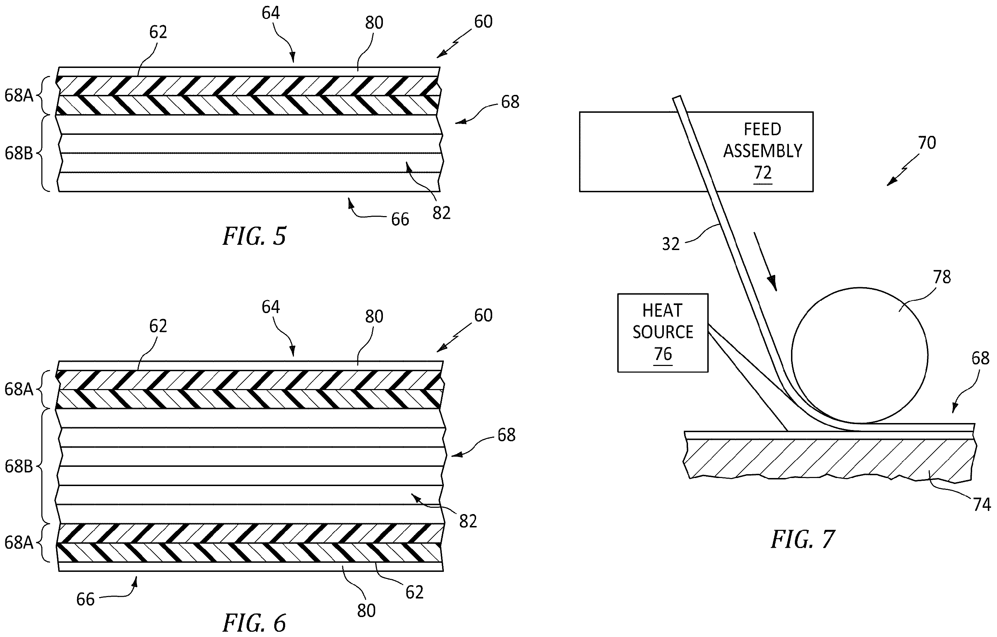

Step 208 includes forming a thermoplastic part 60 using the thermoplastic film 32. FIG. 5 schematically illustrates a cutaway view of a first example of the thermoplastic part 60 forming an exterior thermoplastic film surface 62 on a first side 64 of the thermoplastic part 60. FIG. 6 schematically illustrates a cutaway view of a second example of the thermoplastic part 60 forming exterior thermoplastic film surfaces 62 on the first side 64 and a second side 66 (e.g., an opposing second side) of the thermoplastic part 60. The thermoplastic part 60 of FIGS. 5 and 6 may be configured, for example, as a panel which may form an exterior surface or skin for a portion of the fuselage 22, the wings 24, the tail assembly 28, the nacelle 30, or another thermoplastic of the aircraft 20 (see FIG. 1).

The thermoplastic part 60 is formed by a plurality of discrete film layers 68 of the thermoplastic film 32 (e.g., different thermoplastic films 32) stacked together, consolidated, and cured to form a thermoplastic body 82 of the thermoplastic part 60. As previously discussed, thermoplastics, such as the thermoplastic part 60, may be thermoplastic composite parts. For example, one or more of the film layers 68 may be a thermoplastic composite film including an embedded fiber-reinforcing material. The reinforcement fibers of the film layers 68 may have a fiber direction (e.g., all fibers in a layer may be oriented in the same direction). In some instances, the film layers 68 may have different fiber directions. For example, a first film layer may have fibers oriented in a first direction and a second film layer may have fibers oriented in a second direction that is perpendicular to the first direction, or at opposing forty-five degree angles, or at opposing thirty degree angles, or the like.

The film layers 68 of the thermoplastic part 60 include one or more sulfonated film layers 68A and a plurality of unsulfonated film layers 68B. The sulfonated film layers 68A may be sulfonated, for example, as described above in steps 202, 204 and 206. In contrast, the unsulfonated film layers 68B are layers of thermoplastic film (e.g., the thermoplastic film 32) which have not been sulfonated or otherwise treated to increase their surface energy. The sulfonated film layers 68A form the exterior thermoplastic film surface 62 which is a coating surface of the thermoplastic material forming the thermoplastic part 60. For example, the thermoplastic part 60 may include one or more sulfonated film layers 68A (e.g., adjacent sulfonated film layers 68A) at the exterior thermoplastic film surface 62. Typically, one or two sulfonated film layers 68A at the exterior thermoplastic film surface 62 may be sufficient for facilitating improved coating of the exterior thermoplastic film surface 62; however, the present disclosure is not limited to any particular number of adjacent (e.g., stacked) sulfonated film layers 68A at the exterior thermoplastic film surface 62. For example, the thermoplastic part 60 of FIG. 5 includes the sulfonated film layers 68A at the exterior thermoplastic film surface 62 on the first side 64 while the thermoplastic part 60 of FIG. 6 includes the sulfonated film layers 68A at the exterior thermoplastic film surfaces 62 on the first side 64 and the second side 66. The unsulfonated film layers 68B may form a remainder of the film layers 68 of the thermoplastic part 60. For example, the unsulfonated film layers 68B may typically form the large majority of the film layers 68 of the thermoplastic part 60.

The film layers 68 of the thermoplastic part 60 may be consolidated together by heating the stack up of the film layers 68 to a temperature above the thermoplastic material melting point while applying pressure to shape the thermoplastic part 60, for example, using any suitably thermoplastic consolidation process conventionally known in the art. For example, the thermoplastic part 60 may be formed using an automated tape laying (ATL) process or an automated fiber placement (AFP) process to deposit and consolidate the film layers 68 to form the thermoplastic part 60. FIG. 7 schematically illustrates an exemplary AFP assembly 70. The AFP assembly 70 of FIG. 7 includes a feed assembly 72. The feed assembly 72 is configured to direct (e.g., feed) the film layers 68 onto a mandrel 74 or other support structure. The AFP assembly 70 of FIG. 7 further includes a heat source 76 (e.g., a laser, a heated gas nozzle, etc.) configured to heat the film layers 68 as the film layers 68 are sequentially deposited onto the mandrel 74 or onto a previously deposited one of the film layers 68. The AFP assembly 70 may further include a consolidation roller 78 configured to apply consolidation pressure to each of the deposited film layers 68.

Step 210 includes applying at least one coating layer 80 onto the exterior thermoplastic film surface 62 (e.g., onto one of the sulfonated film layers 68A) as shown, for example, in FIGS. 5 and 6. The coating layer 80 may include, but is not limited to, a primer, a topcoat, a paint, a metal plating, a lightning strike protection layer, a bonding agents, or another suitable coating other than a thermoplastic material (e.g., the sulfonated or unsulfonated thermoplastic film 32). The present disclosure is not limited to any particular coating or coating process.

The sulfonation treatment of the present disclosure facilitates treatment of large thermoplastic parts (e.g., aerostructure parts) and/or thermoplastic parts having complex three-dimensional curvatures, without the need for a large sulfonation tank or chamber sized to accommodate these aerostructure parts. The present disclosure sulfonation method may instead be performed during thermoplastic part manufacture without the need for large, expensive, or complex gas sulfonation equipment. Moreover, the present disclosure sulfonation method may achieve the coating benefits of sulfonated thermoplastics without the need to sulfonate the entire thermoplastic part (e.g., by sulfonating the thermoplastic film layers forming the coated exterior of the thermoplastic part). The sulfonation treatment of the present disclosure facilitates improved surface energy and wettability characteristics of the treated thermoplastic parts, thereby improving the adhesion of paint, metal plating, lightning strike protection layers, bonding agents, and/or other coatings. For example, the sulfonation treatment of the present disclosure may reduce the static contact angle of treated surfaces of thermoplastic parts to 30 degrees or less.

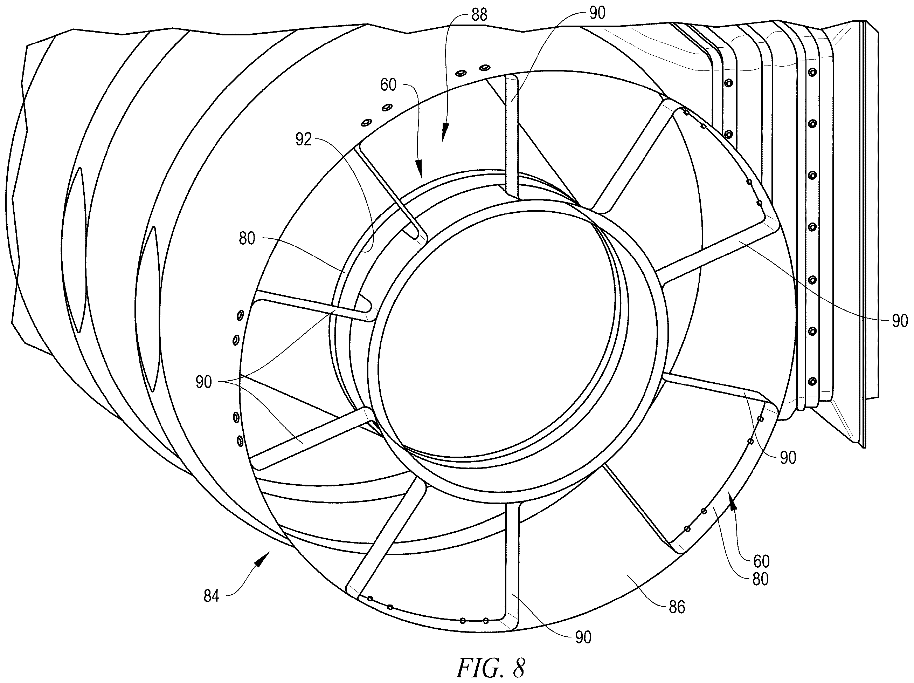

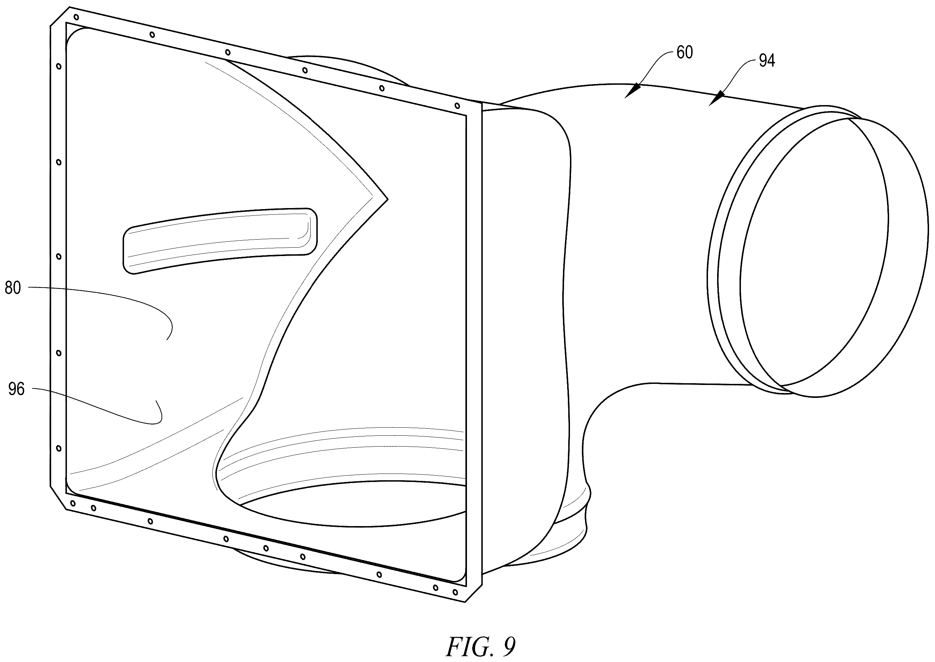

Referring to FIGS. 8 and 9, aspects of the present disclosure may facilitate application of erosion and/or thermal protection coatings for thermoplastic parts such as, but not limited to, aircraft and aircraft propulsion system air-handling assemblies and parts. As an example, air management system (AMS) parts, such as those found in some aircraft propulsion systems, may be operated at elevated temperatures (e.g., greater than 250 °F). These elevated temperatures may negatively impact thermoplastic part material properties and may accelerate thermoplastic part degradation and eventual replacement. These AMS parts may also be exposed to and damaged by foreign object debris (FOD) entrained in high-velocity air flowing through the AMS. To protect these thermoplastic parts from thermal and/or erosion damage, the coating layer 80 may be applied onto the sulfonated film layers 68A of these thermoplastic parts (e.g., thermoplastic parts 60) to form air flow surfaces of the thermoplastic parts.

FIG. 8 illustrates a perspective view of an exemplary fan inlet diffuser housing (FIDH) 84 for an AMS of an aircraft propulsion system. Components and/or portions of the fan inlet diffuser housing 84 may be formed as thermoplastic parts 60, as described above. For example, the fan inlet diffuser housing 84 of FIG. 8 includes an outer housing structure 86, an inner housing structure 88, and a plurality of support struts 90. The inner housing structure 88 forms an ejector leading edge 92. The support struts 90 extend between and interconnect the outer housing structure 86 and the inner housing structure 88. All or portions of the inner housing structure 88 and the support struts 90 may be formed as thermoplastic parts 60 including the sulfonated film layers 68A and unsulfonated film layers 68B (see FIGS. 5 and 6). Exposed air flow surfaces of the inner housing structure 88 and the support struts 90 may be metalized or otherwise coated by applying the coating layer 80 (e.g., a metal or metal alloy plating deposited onto the sulfonated film layers 68A) to the inner housing structure 88, particularly at the ejector leading edge 92, and the support struts 90.

FIG. 9 illustrates a perspective view of an exemplary outlet header body 94 for an AMS of an aircraft propulsion system. All or portions of the outlet header body 94 may be formed as a thermoplastic part 60 including the sulfonated film layers 68A and unsulfonated film layers 68B (see FIGS. 5 and 6). In particular, interior airflow surfaces 96 of the outlet header body 94 may include and be formed by the coating layer 80 (e.g., a metal or metal alloy plating) deposited onto the sulfonated film layers 68A.

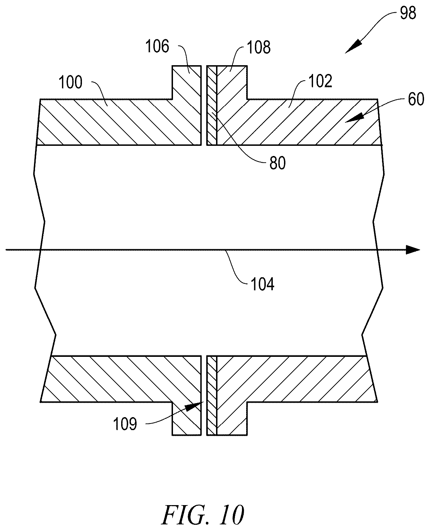

Referring to FIG. 10, aspects of the present disclosure may also facilitate application of electrically-conductive coatings for thermoplastic parts such as, but not limited to, aircraft and aircraft propulsion system air-handling assemblies and parts. As an example, AMS parts, such as those found in some aircraft propulsion systems, may be exposed to high-velocity air flowing through the AMS, as discussed above. This high-velocity airflow may cause substantial static charges to build up in thermoplastic parts, which static charges must be safely dissipated to electrically grounded portions of the aircraft propulsion system or aircraft structures. FIG. 10 schematically illustrates a cutaway, side view of a portion of an air management system (AMS) 98 for an aircraft propulsion system. The air management system 98 includes a first airflow structure 100 (e.g., a compressor casing) and a second airflow structure 102 (e.g., a fan inlet diffuser housing (FIDH)) forming an air flow path 104 therethrough. The first airflow structure 100 may be a metal, metal alloy, or otherwise electrically conductive body grounded to the associated aircraft propulsion system and/or aircraft. The first airflow structure 100 includes a first flange 106. The second airflow structure 102 is a thermoplastic part 60. The second airflow structure 102 includes a second flange 108 coupled with the first flange 106 to mount the second airflow structure 102 onto the first airflow structure 100. All or portions of a mating surface 109 of the second flange 108 may include and be formed by the coating layer 80 (e.g., a metal or metal alloy plating) deposited onto the sulfonated film layers 68A (see FIGS. 5 and 6). This metallic coating layer 80 applied to the mating surface 109 and contacting the first airflow structure 100 (e.g., the first flange 106) facilitates grounding of the second airflow structure 102 to the first airflow structure 100 to minimize or dissipate the build up of static charge in the second airflow structure 102, and obviates the need for grounding straps or additional grounding components for the second airflow structure 102.

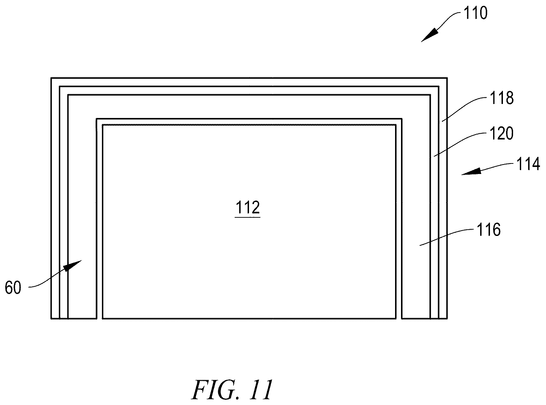

Referring to FIG. 11, aspects of the present disclosure may also facilitate application of fire and/or heat-shielding materials for thermally-sensitive aircraft and/or aircraft propulsion system components such as, but not limited to, power and/or control components and component assemblies, actuators, electronics, and the like. Housings, cases, and other heat and/or fire protective bodies for these thermally-sensitive components may conventionally be made from metals or metal alloys for their mechanical and heat-resistance properties. Thermoplastic composite materials may be more desirable for some of these housings, cases, and protective bodies, from a weight perspective; however, thermoplastic composites are not as resistant to high-temperature conditions. FIG. 11 schematically illustrates a cutaway, side view of an assembly 110 including a thermally-sensitive component 112 and a heat shield 114 housing the thermally-sensitive component 112. The heat shield 114 includes a thermoplastic material body 116 (e.g., a thermoplastic part 60) including the sulfonated film layers 68A and unsulfonated film layers 68B, as described above (see FIGS. 5 and 6). The heat shield 114 further includes a thermally-resistant material 118 bonded to the thermoplastic material body 116 by a bonding agent 120 (e.g., an adhesive). Examples of the thermally-resistant material 118 include ceramic tiles, thermally-resistant insulating materials, fibers, mats, etc., metallic plating, and the like. The sulfonated film layers 68A of the thermoplastic material body 116 facilitate improved bonding of the thermally-resistant material 118 onto the thermoplastic material body 116 (e.g., the sulfonated film layers 68A) with the bonding agent 120.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A method (200) for forming a thermoplastic part, the method comprising:
sulfonating a thermoplastic film by exposing the thermoplastic film to a sulfonation fluid to form a sulfonated thermoplastic film; and
forming the thermoplastic part with a plurality of stacked thermoplastic film layers, the plurality of stacked thermoplastic film layers including at least one sulfonated thermoplastic film layer of the sulfonated thermoplastic film and a plurality of unsulfonated thermoplastic film layers, the at least one sulfonated thermoplastic film layer forming a first exterior thermoplastic film surface of the thermoplastic part.

2. The method (200) of claim 1, wherein sulfonating the thermoplastic film includes increasing a sulfur content of the sulfonated thermoplastic film to have an infrared spectrum detectable amount of a sulfone group (O=S=O) with a peak wavenumber between 1,000 cm⁻¹ and 1,098 cm⁻¹, and optionally wherein sulfonating the thermoplastic film includes increasing the sulfur content of the sulfonated thermoplastic film to have the infrared spectrum detectable amount of the sulfone group (O=S=O) with the peak wavenumber between 1,025 cm⁻¹ and 1,050 cm⁻¹.

3. The method (200) of claim 1 or 2, wherein sulfonating the thermoplastic film includes sulfonating the thermoplastic film with a continuous sulfonation assembly by continuously feeding the thermoplastic film through a sulfonating chamber of the continuous sulfonation assembly containing the sulfonation fluid, and optionally wherein sulfonating the thermoplastic film with the continuous sulfonation assembly includes heating the thermoplastic film with a heater of the continuous sulfonation assembly prior to feeding the thermoplastic film through the sulfonating chamber.

4. The method (200) of any preceding claim, further comprising applying a neutralizing agent to the sulfonated thermoplastic film between the steps of sulfonating the thermoplastic film and forming the thermoplastic part.

5. The method (200) of any preceding claim, wherein the thermoplastic part extends between and to a first side and a second side, the at least one sulfonated thermoplastic film layer includes a first sulfonated thermoplastic film layer and a second thermoplastic film layer, the first sulfonated thermoplastic film layer forms the first exterior thermoplastic film surface at the first side, the second sulfonated thermoplastic film layer forms a second exterior thermoplastic film surface at the second side, and the plurality of unsulfonated thermoplastic film layers are disposed between the first sulfonated thermoplastic film layer and the second sulfonated thermoplastic film layer.

6. The method (200) of any preceding claim, further comprising coating the first exterior thermoplastic film surface by applying a coating layer onto the at least one sulfonated thermoplastic film at the first exterior thermoplastic film surface.

7. The method (200) of any preceding claim, wherein the thermoplastic film includes one or more of a polyether ether ketone (PEEK), a poly ether ketone ketone (PEKK), or a poly aryl ether ketone (PAEK) thermoplastic material.

8. The method (200) of any preceding claim, wherein the thermoplastic film further includes a fiber-reinforcing material embedded in the thermoplastic material.

9. A method (200) comprising:
sulfonating a thermoplastic film having a first film side and a second film side by exposing one or both of the first film side and the second film side to a sulfonation fluid to form a sulfonated thermoplastic film.

10. The method (200) of claim 9, wherein sulfonating the thermoplastic film includes exposing the thermoplastic film to the sulfonation fluid in a sulfonation chamber to form the sulfonated thermoplastic film by continuously feeding the thermoplastic film through the sulfonation chamber in a feed direction.

11. The method (200) of claim 9 or 10, further comprising forming a thermoplastic part with a plurality of stacked thermoplastic film layers, the plurality of stacked thermoplastic film layers including at least one of the sulfonated thermoplastic film, the at least one of the sulfonated thermoplastic film forming a first exterior thermoplastic film surface of the thermoplastic part, and optionally further comprising coating the first exterior thermoplastic film surface by applying a coating layer onto the at least one sulfonated thermoplastic film at the first exterior thermoplastic film surface.

12. The method (200) of any of claims 9-11, wherein sulfonating the thermoplastic film includes exposing only one of the first film side or the second film side to the sulfonation fluid.

13. The method (200) of any of claims 9-12, wherein the thermoplastic film includes one or more of a polyether ether ketone (PEEK), a poly ether ketone ketone (PEKK), or a poly aryl ether ketone (PAEK) thermoplastic material.

14. A method (200) for forming a thermoplastic part, the method comprising:
forming the thermoplastic part by assembling and consolidating a plurality of stacked thermoplastic film layers, the plurality of stacked thermoplastic film layers including at least one sulfonated thermoplastic film layer and a plurality of unsulfonated thermoplastic film layers, the at least one sulfonated thermoplastic film layer having a sulfur content such that the at least one sulfonated thermoplastic film layer has an infrared spectrum detectable amount of a sulfone group (O=S=O) with a peak wavenumber between 1,000 cm⁻¹ and 1,098 cm⁻¹, the at least one sulfonated thermoplastic film layer forming a first exterior thermoplastic film surface of the thermoplastic part.

15. The method (200) of claim 14, further comprising sulfonating a thermoplastic film to form each of the at least one sulfonated thermoplastic film layer, and sulfonating the thermoplastic film includes sulfonating the thermoplastic film with a continuous sulfonation assembly by continuously feeding the thermoplastic film through a sulfonating chamber of the continuous sulfonation assembly containing a sulfonation fluid; and/or
wherein the thermoplastic part extends between and to a first side and a second side, the at least one sulfonated thermoplastic film layer includes a first sulfonated thermoplastic film layer and a second thermoplastic film layer, the first sulfonated thermoplastic film layer forms the first exterior thermoplastic film surface at the first side, the second sulfonated thermoplastic film layer forms a second exterior thermoplastic film surface at the second side, and the plurality of unsulfonated thermoplastic film layers are disposed between the first sulfonated thermoplastic film layer and the second sulfonated thermoplastic film layer; and/or
further comprising coating the first exterior thermoplastic film surface by applying a coating layer onto the at least one sulfonated thermoplastic film layer at the first exterior thermoplastic film surface.
